# EUROPEAN PATENT SPECIFICATION

(11) **EP 1 167 245 B1**
(45) Date of publication and mention of the grant of the patent: **12.10.2005**
(21) Application number: 01111684.5
(22) Date of filing: 14.05.2001
(51) Int. Cl.: B65G 1/04

(54) **Device for changing the conveyance direction of a conveying roller**
Vorrichtung zum Ändern der Bewegungsrichtung eines Rollenförderers
Dispositif adapté à changer la direction de transport d'un convoyeur à roulettes

(30) Priority: 20.06.2000 JP 2000184109
(43) Date of publication of application: 02.01.2002
(73) Proprietor: ITOH ELECTRIC CO., LTD., Hyogo-ken (JP)
(72) Inventor: Nakamura, Tatsuhiko, Hyogo-ken (JP)
(74) Representative: Glawe, Delfs, Moll

(56) References cited:
- US-A- 1 460 539
- PATENT ABSTRACTS OF JAPAN vol. 1998, no. 01, 30 January 1998 (1998-01-30) & JP 09 240818 A (NAKAMURA GAKUJO), 16 September 1997 (1997-09-16)

## Description

### TECHNICAL FIELD OF THE INVENTION

The present invention relates to a device for changing the conveyance direction of work pieces conveyed on a conveying roller on the same conveyance plane.

### PRIOR ART

Devices for changing the conveyance direction of work pieces on the same plane (the same conveyance plane) include one that is disclosed in Japanese Patent Laid-Open No. 240818/1997.

### PROBLEMS TO BE SOLVED BY THE INVENTION

Such devices have unnecessarily complicated mechanisms, creating a need for a device having a more simple mechanism. It is also desired that such devices can be easily joined with one another to change the size of the whole system as necessary.

The present invention provides a solution to such desires by making it possible to extract two rotational outputs accompanying normal and reverse rotations of one motor that can rotate normally and reversely, using a simple mechanism.

### MEANS FOR SOLVING THE PROBLEMS

In order to achieve the above objectives, in the present invention two rotational outputs accompanying the normal and reverse rotations of a motor, which can rotate normally and reversely, are extracted separately, and one of the rotational outputs is used to drive a work-piece-conveying roller, which is rotatable around a horizontal axis, and the other rotational output is used to change the direction of the roller.

When using this device, the roller for conveying work pieces can be driven and its conveyance direction can be changed by causing the motor to rotate normally or reversely. In other words, the work pieces can be conveyed in any specified direction on the same plane (the same conveyance plane) using one motor, i.e., the motor.

The means for extracting the two rotational outputs accompanying the normal and reverse rotations of the motor preferably consists of first and second driving gears, which always rotate in the same direction regardless of whether the motor rotates normally or reversely. The work-piece-conveying roller is held by a second driven gear, which rotates in an interlocked manner with the second driving gear, and the periphery of the roller is in contact with a first driven gear, which rotates in an interlocked manner with the first driving gear.

In this way, the two rotational outputs accompanying the normal and reverse rotations of the motor can be extracted from the first and second driving gears, and the two rotational outputs that have been taken out can be used to drive the work-piece-conveying roller and to change its direction separately.

The motor that can rotate normally and reversely and the first and second driving gears that always rotate in the same direction regardless of the whether the motor rotates normally or reversely, constitute a driving unit; and the first driven gear that rotates in an interlocked manner with the first driving gear, the second driven gear that rotates in an interlocked manner with the second driving gear, and the work-piece-conveying roller, whose periphery is in contact with the first driven gear, constitute a driven unit. Several driven units may be arranged in an interlocked manner with the driving unit.

In this case, the two-dimensional size of each conveyance-direction-changing device unit can be changed freely by simply increasing or decreasing the number of driven units that should be arranged in an interlocked manner with the driving unit.

In practice, several conveyance-direction-changing device units each consisting of a driving unit and several driven units can be arranged on the same plane (the same conveyance plane).

In this case, the two-dimensional size of the entire conveyance-direction-changing device can be easily and freely changed by simply increasing the number of conveyance-direction-changing device units.

By controlling each conveyance-direction-changing device units, the work piece can be conveyed in any direction on the same plane (the same conveyance plane).

### PREFERRED EMBODIMENTS OF THE INVENTION

Preferred embodiments of the present invention will be explained with reference to the accompanying drawings.

### BRIEF DESCRIPTIONS OF THE DRAWINGS

FIG. 1 is a longitudinal section view of an example of the present invention, showing a condition in which one driven unit is arranged adjacent to one driving unit.
FIG. 2 is a schematic plan view showing a condition in which four driven units are arranged per driving unit.
FIG. 3 is a schematic plan view showing a condition in which several driven units are arranged per driving unit.
FIG. 4 is a schematic plan view showing a condition in which several conveyance-direction-changing devices are arranged on the same plane (the same conveyance plane).

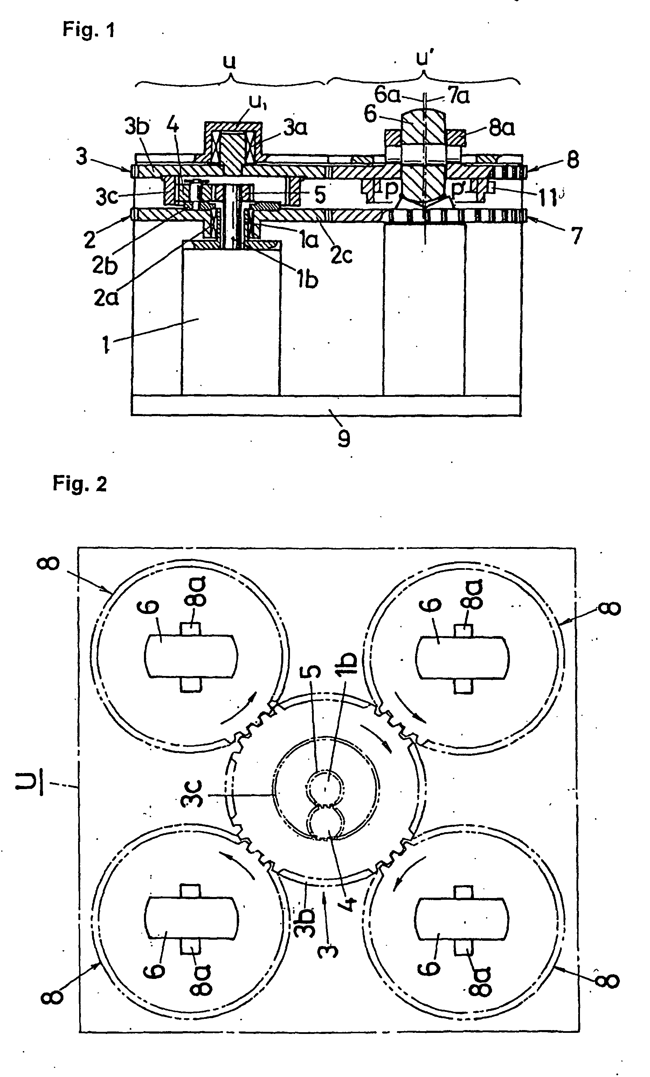

FIG. 1 shows an example of a device of the present invention, in which two rotational outputs accompanying the normal and reverse rotations of a motor 1 capable of rotating normally and reversely are extracted separately, and one of the rotational outputs is used to drive a work-piece-conveying roller 6, which can be rotated around a horizontal axis, and the other rotational output is used to change the direction of the roller 6.

FIG. 1 shows a condition in which a driven unit u' is arranged adjacent to a driving unit u that is installed on a base 9. Preferably, as shown in FIG. 2, four driven units u' are arranged evenly for each driving unit.

For the sake of convenience, in this specification, a clockwise rotation in FIG. 2 (plan view) is referred to as a normal rotation, and a counterclockwise rotation in FIG. 2 is referred to as a reverse rotation.

A normally and reversely rotating motor 1 is installed on the base 9, and first and second driving gears 2, 3 that always rotate normally regardless of whether the motor 1 rotates normally or reversely are mounted on the shaft 1b of the motor 1 to constitute a driving unit u. Other components of the driving unit u includes a first driven gear 7, which is installed on the base 9 and rotates in an interlocked manner with the first driving gear 2, a second driven gear 8, which rotates in an interlocked manner with the second driving gear 3, and a work-piece-conveying roller 6, which is held by the second driven gear 8 and whose periphery is in contact with the first driven gear 7.

The second and third driving gears 2, 3 are both components of the driving unit u. In order to rotate these first and second driving gears 2, 3 normally when the motor 1 rotates normally or reversely, the driving gear 2 of FIG. 1 comprises a carrier plate 2b, which is mounted to a flange 1a of the motor 1 via a one-way clutch 2a, and an external gear 2c, which is fastened to the carrier plate 2b coaxially with the motor shaft 1a. The second driving gear 3, on the other hand, comprises an external gear 3b, which is mounted to the external case u1 of the driving unit u via a one-way clutch 3a, and an internal gear 3c, which is fastened to the external gear 3b coaxially with the motor shaft 1b. In the outer part of the carrier plate 2b, an idler 4 is rotatably mounted, and this idler 4 is meshed with an external gear 5 fastened to the motor shaft 1b and the internal gear 3c.

When the motor 1 rotates normally, the torque is transmitted to the external gear 5 fastened to the shaft 1b of the motor 1, and to the internal gear 3c and the external gear 3b via the idler 4, which is meshed with the external gear 5. The torque acts on these gears to turn them reversely, but the rotation is stopped by the one-way clutch 3a, which locks the gears. On the other hand, the first driving gear 2 consisted of the carrier plate 2b and the external gear 2c rotate normally.

Conversely, when the motor 1 rotates reversely, the torque is transmitted to the external gear 5 fastened to the shaft 1b of the motor 1, and to the carrier plate 2b and the external gear 2c via the idler 4, which is meshed with the external gear 5. The torque acts on these gears to turn them reversely, but the rotation is stopped by the one-way clutch 2a, which locks the gears. On the other hand, the second driving gear 3 consisted of the internal gear 3c and the external gear 3b rotate normally.

The second and third driven gears 7, 8 are both components of the driven unit u'. In order to rotate the driven gear 7 in an interlocked manner with the first driving gear 2, and to rotate the driven gear 8 in an interlocked manner with the driving gear 3, the first and second driven gears 7, 8 shown in FIG. 1 are both external gears, which are individually meshed with the external gear 2c of the first driving gear 2 and the external gear 3b of the second driven gear 3.

The work-piece-conveying roller 6 is held by the second driven gear 8, which itself is an external gear, and the periphery of the roller 6 is in contact with the first driving gear 7. In FIG. 1, code 8a is a support bracket for the roller 6.

Accordingly, when the first driving gear 2 rotates normally, the first driven gear 7 rotates in an interlocked manner with the first driving gear 2, and the work-piece-conveying roller 6 whose periphery is in contact with the driven gear 7 rotates around a horizontal axis.

When the second driving gear 3 rotates normally (in the arrow direction of FIG. 2), the second driven gear 8 rotates in an interlocked manner with the second driving gear 3 (in the arrow direction of FIG. 2), and the work-piece-conveying roller 6, which is held by the second driven gear 8 changes its direction from the position depicted in a solid line.

As described above, by controlling the motor 1, which can rotate normally and reversely, the work-piece-conveying roller 6 can be rotated, and the direction of the work-piece-conveying roller 6 can be changed automatically.

In FIG. 1, code 11 is a sensor arranged immediately below the second driven gear 8. This sensor detects the amount of rotation (rotation angle) of the second driven gear 8, and as a result, the directional changing angle for the roller 6 held by the second driven gear 8 can be easily known.

In this embodiment, as shown in FIG. 1, the core 6a of the work-piece-conveying roller 6 can be shifted relative to the center axis 7a of the first driven gear 7. When the periphery of the roller 6 contacts side p of the projecting edge of the driven gear 7, the roller 6 rotates in one direction, whereas when the periphery of the roller 6 contacts side p' of the projecting edge of the driven gear 7, the roller 6 rotates in the other direction.

In the embodiment shown in this drawing, in order to rotate the first driven gear 7 and the second driven gear 8, which are both components of the driven unit u', in an interlocked manner with the rotation of the first driving gear 2 and the rotation of the second driving gear 3 respectively, the first and second driven gears 7, 8 are both external gears, which are separately meshed with the external gear 2c of the first driving gear 2 and the external gear 3b of the second driven gear 3. It is also possible to employ another interlocking method in which the first and second driving gears 2, 3 and the first and second driven gears 7, 8 are all pulleys or sprockets, and the pulleys or sprockets forming a pair are connected to each other by a timing belt or a chain.

In this embodiment, the first and second driving gears 2, 3 always rotate normally regardless of whether the motor 1 rotates normally or reversely. It is also possible to have the driving gears 2, 3 rotate reversely regardless of whether the motor 1 rotates normally or reversely.

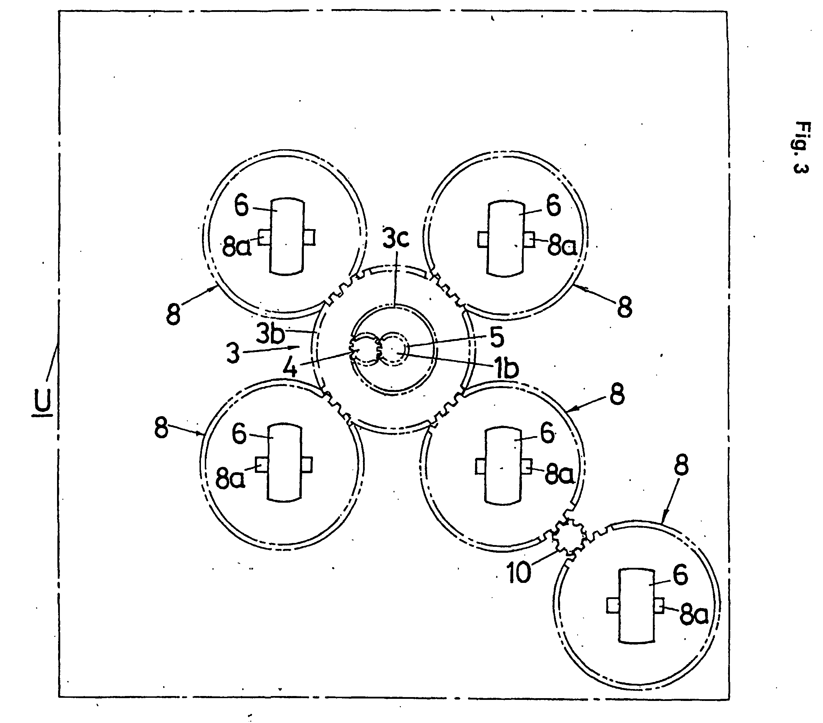

The above example describes details of a structure comprising a driving unit u and another driven unit u'. It is also possible to combine the same driving unit u with several driven units u', u'. For example, as shown in FIG. 3, one driven unit u' arranged so as to act in an interlocked manner with one driving unit can be further connected to another driven unit u' via an idler unit 10. In this case, it is possible to freely change the two-dimensional size of the conveyance-direction-changing device U by simply increasing or decreasing the number of driven units u' that should be arranged in an interlocked manner with the driving unit.

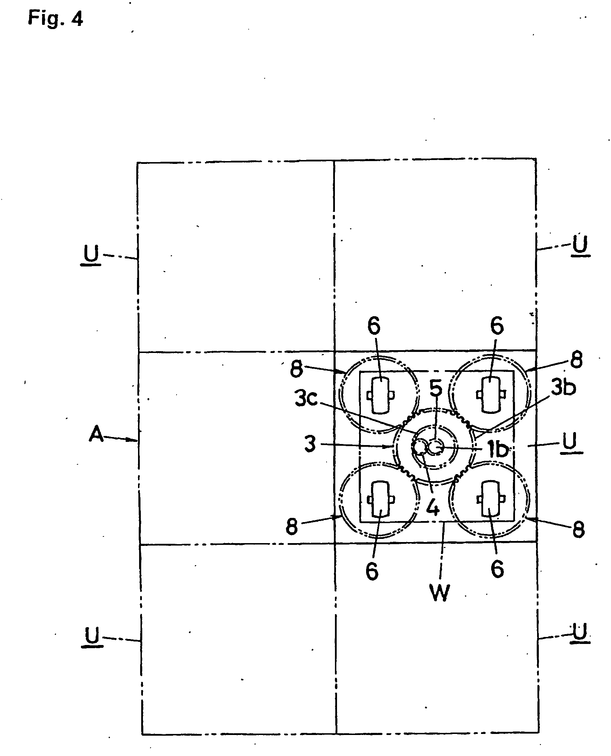

Moreover, several conveyance-direction-changing device units U each comprising a driving unit and several driven units u', u' can be arranged on the same plane (the same conveyance plane) as shown in FIG. 4.

In this case, the two-dimensional size of the entire conveyance-direction-changing device indicated by code A in the drawing can be easily and freely changed by simply increasing or decreasing the number of conveyance-direction-changing device units U on the same plane (the same conveyance plane).

### EFFECTS OF THE INVENTION

Using the conveyance-direction-changing device described in claim 1, two rotational outputs accompanying the normal and reverse rotations of the motor 1 can be extracted separately in a simple mechanism, and one of the rotational outputs is used to drive the work-piece-conveying roller 6, which is rotatable around a horizontal axis, and the other rotational output is used to change the direction of the roller 6.

Using the conveyance-direction-changing device described in claim 2, two rotational outputs accompanying the normal and reverse rotations of the motor 1 can be extracted from the first and second driving gears 2, 3 that always rotate in one direction regardless of whether the motor 1 rotates normally or reversely, and the two rotational outputs extracted can be separately used to rotate the work-piece-conveying roller 6 and to change its direction.

Using the conveyance-direction-changing device described in claim 3, the two-dimensional size of the conveyance-direction-changing device unit U can be freely changed by simply increasing or decreasing the number of driven units u' that should be arranged in an interlinked manner with one driving unit u.

Using the conveyance-direction-changing device described in claim 4, the two-dimensional size of the entire conveyance-direction-changing device can be easily and freely changed by simply increasing or decreasing the number of conveyance-direction-changing device units U on the same plane (the same conveyance plane). By controlling each conveyance-direction-changing device units U, U individually, the work piece W can be conveyed in any direction on the same plane (the same conveyance plane).

## Claims

1. A device for changing the conveyance direction of at least one work-piece-conveying roller (6), comprising
- a motor (1) which can rotate normally and reversely, and
- two separately extracted rotational outputs for the normal and reverse rotations of said motor,
one of said rotational outputs being used to drive the work-piece-conveying roller (6), which is rotatable around a horizontal axis, and the other rotational output being used to change the direction of the roller (6),
**characterized in that**
the means for extracting the two rotational outputs accompanying the normal and reverse rotations of the motor (1) consists of first and second driving gears (2, 3) which always rotate in the same direction regardless of whether the motor (1) rotates normally or reversely,
**in that** a first driven gear (7) rotates in an interlocked manner with the first driving gear (2),
**in that** a second driven gear (8) rotates in an interlocked manner with the second driving gear (3),
and **in that** the work-piece-conveying roller (6) is held by said second driven gear (8) and the periphery of the work-piece-conveying roller (6) is in contact with said first driven gear (7).

2. A device as claimed in claim 1, **characterized in that** the motor (1) that can rotate normally and reversely and the first and second driving gears (2, 3) that always rotate in the same direction regardless of the whether the motor (1) rotates normally or reversely constitute a driving unit (u); the first driven gear (7) that rotates in an interlocked manner with the first driving gear (2), the second driven gear (8) that rotates in an interlocked manner with the second driving gear (3), and the work-piece-conveying roller (6), whose periphery is in contact with the first driven gear (7), constitute a driven unit (u'); and several driven units (u', u') are arranged in an interlocked manner with the driving unit (u).

3. A device as claimed in claim 2, **characterized in that** several conveyance-direction-changing units (U) each comprising a driving unit and several driven units (u', u') are arranged on the same plane (the same conveyance plane).

## Patentansprüche

1. Vorrichtung zum Wechseln der Förderrichtung mindestens einer Werkstück-Förderrolle (6), umfassend
- einen Motor (1), der in Normalrichtung und Rückwärtsrichtung drehen kann, und
- zwei getrennt herausgeführte Drehabtriebe für die Normal- und Rückwärtsdrehrichtung des Motors,
wobei einer der Drehabtriebe zum Antrieb der Werkstück-Förderrolle (6), die um eine horizontale Achse drehbar ist, und der andere Drehabtrieb zum Wechseln der Richtung der Rolle (6) dient,
**dadurch gekennzeichnet,**
**dass** die Mittel zum Herausführen der zwei Drehabtriebe für die Normal- und Rückwärtsdrehung des Motors (1) aus einem ersten und zweiten Antriebszahnrad (2, 3) bestehen, die sich immer in der selben Richtung drehen, gleichgültig ob der Motor (1) normal oder rückwärts dreht,
**dass** ein erstes angetriebenes Zahnrad (7) in Eingriff mit dem ersten Antriebszahnrad (2) rotiert,
**dass** ein zweites angetriebenes Zahnrad (8) in Eingriff mit dem zweiten Antriebszahnrad (3) rotiert,
und **dass** die Werkstück-Förderrolle (6) von den zweiten angetriebenen Zahnrad (8) getragen ist und der Umfang der Werkstück-Förderrolle (6) in Berührung mit dem ersten angetriebenen Zahnrad (7) ist.

2. Vorrichtung nach Anspruch 1, **dadurch gekennzeichnet, dass** der Motor (1), der normal und rückwärts drehen kann, und das erste und zweite Antriebszahnrad (2, 3), die immer in der gleichen Richtung drehen unabhängig davon, ob der Motor (1) normal oder rückwärts dreht, eine Antriebseinheit (u) bilden; dass das erste angetriebene Zahnrad (7), das in Eingriff mit dem ersten Antriebszahnrad (2) dreht, das zweite angetriebene Zahnrad (8), das in Eingriff mit dem zweiten Antriebszahnrad (3) dreht, und die Werkstück-Förderrolle (6), deren Umfang in Berührung mit dem ersten angetriebenen Zahnrad (7) ist, eine angetriebene Einheit (u') bilden; und dass mehrere angetriebene Einheiten (u', u') in Eingriff mit der Antriebseinheit (u) angeordnet sind.

3. Vorrichtung nach Anspruch 2, **dadurch gekennzeichnet, dass** mehrere Einheiten (U) zum Wechsel der Förderrichtung, die jeweils eine Antriebseinheit und mehrere Antriebseinheiten (u', u') umfassen, in der gleichen Ebene (der gleichen Förderebene) angeordnet sind.

## Revendications

1. Dispositif permettant de changer la direction de transport d'au moins un rouleau de transport porte-pièces (6), comprenant :
un moteur (1) qui peut tourner normalement et à l'envers, et
deux sorties de rotation extraites séparément pour les rotations normale et inversée dudit moteur,
l'une desdites sorties de rotation étant utilisée pour entraîner le rouleau de transport porte-pièces (6) qui peut tourner autour d'un axe horizontal, et l'autre sortie de rotation étant utilisée pour changer la direction du rouleau (6),
**caractérisé en ce que**
les moyens pour extraire les deux sorties de rotation accompagnant les rotations normale et inversée du moteur (1) se composent d'une première et d'une deuxième roues dentées de commande (2, 3) qui tournent toujours dans la même direction indépendamment du fait que le moteur (1) tourne normalement ou à l'envers,
**en ce qu'**une première roue dentée entraînée (7) tourne par engrenage avec la première roue dentée de commande (2),
**en ce qu'**une deuxième roue dentée entraînée (8) tourne par engrenenage avec la deuxième roue dentée de commande (3),
et **en ce que** le rouleau de transport porte-pièces (6) est maintenu par ladite deuxième roue dentée entraînée (8) et la périphérie du rouleau de transport porte-pièces (6) est en contact avec ladite première roue dentée entraînée (7).

2. Dispositif selon la revendication 1, **caractérisé en ce que** le moteur (1) qui peut tourner normalement et à l'envers et les première et deuxième roues dentées de commande (2, 3) qui tournent toujours dans la même direction indépendamment du fait que le moteur (1) tourne normalement ou à l'envers, constituent une unité d'entraînement (u) ; la première roue dentée entraînée (7) qui tourne par engrenage avec la première roue dentée de commande (2) la deuxième roue dentée entraînée (8) qui tourne par engrenage avec la deuxième roue dentée de commande (3), et le rouleau de transport porte-pièces (6), dont la périphérie est en contact avec la première roue dentée entraînée (7), constituent une unité entraînée (u') ; et
plusieurs unités entraînées (u', u') sont disposées par engrenage avec l'unité d'entraînement (u).

3. Dispositif selon la revendication 2, **caractérisé en ce que** plusieurs unités de changement de direction de transport (U) comprenant chacune une unité d'entraînement et plusieurs unités entraînées (u', u') sont disposées sur le même plan (le même plan de transport).
